# EUROPÄISCHE PATENTSCHRIFT

(11) **EP 2 699 880 B1**
(45) Veröffentlichungstag und Bekanntmachung des Hinweises auf die Patenterteilung: **03.06.2015**
(21) Anmeldenummer: 12716249.3
(22) Anmeldetag: 18.04.2012
(51) Int. Cl.: G01L 5/22, G01M 13/02

(54) **GETRIEBEPRÜFVORRICHTUNG**
TRANSMISSION TESTING APPARATUS
APPAREIL DE TEST DE TRANSMISSION

(30) Priorität: 20.04.2011 DE 102011018332; 19.05.2011 DE 102011102094
(43) Veröffentlichungstag der Anmeldung: 26.02.2014
(73) Patentinhaber: ThyssenKrupp System Engineering GmbH, 74076 Heilbronn (DE)
(72) Erfinder: BREITBECK, Heiko, 30177 Hannover (DE); EBELING, Ralf-Martin, Lake Orion, Michigan 48360 (US); KUHL, Joakim, 29693 Hodenhagen (DE)
(74) Vertreter: Loock, Jan Pieter
(86) Internationale Anmeldenummer: PCT/EP2012/001677
(87) Internationale Veröffentlichungsnummer: WO 2012/143128

(56) Entgegenhaltungen:
- WO-A1-2006/089328
- GB-A- 2 322 354

## Beschreibung

Die Erfindung betrifft eine Getriebeprüfvorrichtung, mit einer Bedieneinrichtung, die einen Schalthebel aufweist, wobei ein Führungsteil einer Schalteinrichtung, beispielsweise und insbesondere eines Schaltroboters, den Schalthebel beim Schalten mechanisch angreifend führt.

Aus dem Stand der Technik ist eine Vielzahl an solchen Getriebeprüfvorrichtungen mit Schalteinrichtungen in Form von Schaltrobotern bekannt. Insbesondere aus WO2006/089328 A1 ist ein Gangschaltautömat für Getriebe offenbart, bei dem, um die Exaktheit der Schaltvorgänge zu gewährleisten, Mittel zur im wesentlichen spielfreien Fixierung des Schalthebels von einer Steuerelektronik zumindest während jeder Verschiebung einer Haltevorrichtung aktiv und während Ruhephasen der Haltevorrichtung nicht aktiv sind, so dass in den Phasen zwischen den Schaltvorgängen der Schalthebel dann im wesentlichen kräftefrei ist.

Eine solche Haltevorrichtung weist eine Kugel mit einer Bohrung auf; durch welche Bohrung der Schalthebel geführt und darin in seiner Längsrichtung frei verschiebbar ist, so dass jeder Punkt des Schalthebels während des Schaltvorgangs seine kreissegmentförmige Bahn ungehindert durchlaufen kann, ohne dass die Haltevorrichtung oder ein Teil davon aus der Ebene der orthogonalen Achsen auslenken muß. Die Kugel ihrerseits ist drehbar in einer Scheibe der Haltevorrichtung gehalten, welche Scheibe mit definiertem, im wesentlichen gleichen Spiel in allen Richtungen in der Ebene der zwei orthogonalen Achsen in einer Aufnahme eines Armes der Haltevorrichtung verschiebbar gelagert, senkrecht dazu aber möglichst spielfrei gehalten. Die Haltevorrichtung als Fixiereinrichtung weist drei drehbare, exzentrische Nocken auf, vorzugsweise in gleichen Winkelabständen um die Scheibe verteilt, welche in einer Position außerhalb der Aufnahme verbleiben, so dass die Scheibe mit der Kugel innerhalb dieser Aufnahme mit dem durch die Radiusdifferenz der Scheibe und der Aufnahme gegebenen Spiel verschiebbar bleibt. Diese Stellung der Nocken ist, gesteuert von der Steuerelektronik des Gangschaltautomaten, für die Zeit zwischen den Schaltvorgängen vorgesehen. Um nun die gewünschte Haltewirkung mit geringstmöglichem Spiel für die eigentlichen Schaltvorgänge zu erzielen, können nach Aktivierung durch die Steuerelektronik die Nocken um die exzentrischen Achsen derart verdreht werden, dass sie mit der Scheibe in Anschlag kommen und diese somit allseits unverrückbar in der Aufnahme fixieren. Dabei sind die Wellen der Haltenocken über ein umlaufendes Verbindungselement, beispielsweise einen Riemen, Zahnriemen oder dergleichen, gekoppelt, an welchem Verbindungselement ein einzelner Antrieb gemeinsam für alle Haltenocken angreift.

Nachteilig bei dieser Ausgestaltung ist jedoch der sehr komplizierte mechanische Aufbau und die damit verbundenen Kosten.

Das Problem der vorliegenden Erfindung ist es daher, einen Teil der oben genannten Nachteile zumindest teilweise zu vermindern, insbesondere ist es Aufgabe der vorliegenden Erfindung, eine Getriebeprüfvorrichtung bereitszustellen, die mechanisch relativ einfach und kostengünstig ausgestaltet ist und die es als ein Prüfungskriterium für die Prüfung von Getrieben ermöglicht, sogenannte Gangspringer, also durch Getriebefehler verursachtes Herausspringen von Schalthebeln aus einem Gang, zu erfassen.

Dieses Problem bzw. diese Aufgabe wird erfindungsgemäß gelöst durch eine Getriebeprüfvorrichtung nach Anspruch 1 und ein Verfahren nach Anspruch 9.

Die erfindungsgemäße Getriebeprüfvorrichtung weist auf eine Bedieneinrichtung, die einen Schalthebel aufweist, wobei ein Führungsteil einer Schalteinrichtung, beispielsweise und insbesondere in Form eines Schaltroboters, den Schalthebel beim Schalten mechanisch angreifend führt, wobei das Führungsteil eine Führungskulisse, beispielsweise und insbesondere in Form eines Langlochs in Form einer Materialreduzierung oder Materialausnehmung, aufweist, in die der Schalthebel bei der Getriebeprüfung eingreift, wobei nach Einlegen eines Gangs bei Verbleiben des Schalthebels in der Führungskulisse das Führungsteil den Schalthebel freigebend derart bewegt wird bzw. bewegbar ist, beispielsweise und insbesondere drehbar, dass der Schalthebel in der Führungskulisse bezüglich der Führungskulisse hemmungsfrei beweglich ist und somit nicht vom Führungsteil in seiner Beweglichkeit behindert wird. Auf diese Weise ist es möglich, dass auch sogenannte Gangspringer, das heißt, bei Artefakten, die sich aus Fehlern in einem zu überprüfenden Getriebe ergeben, ein Gang von selbst herausspringt, zu erfassen, wobei die Ausgestaltung relativ einfach und daher kostengünstig ist.

Zunächst ist es vorteilhaft, wenn die freigebende Bewegung des Führungsteils eine Dreh-, Translationsoder Verschwenkbewegung ist, auch in Abhängigkeit der Ausgestaltung der Führungskulisse.

In diesem Zusammenhang ist es besonders vorteilhaft, weil sich dies als besonders effektive und kostengünstige Ausgestaltung in der Praxis dargestellt hat, dass die Führungskulisse zumindest teilweise langlochartig ausgestaltet ist, insbesondere wenn die Führungskulisse als Langloch ausgestaltet ist. In diesem Fall kann dann der Schalthebel über das Führungsteil, was wiederum über die Schalteinrichtung bewegt wird, den Schalthebel in einen Gang bringen, wobei die im wesentlichen translatorische Bewegung des Führungsteils und des Schalthebels quer zur Längsausrichtung der als Langloch ausgestalteten Führungskulisse bewerkstelligt wird, wobei nach Einlegen eines Ganges das Führungsteil im wesentlichen um ca. 90 Grad gedreht wird, so dass dann bei einem eventuell auftretenden Gangspringer der Schalthebel in seiner im wesentlichen translatorischen Verfahrbarkeit ungehindert in der als Langloch ausgestalteten Führungskulisse aus dem jeweiligen Gang springen kann und dieser somit hemmungsfrei in der Kulisse beweglich ist.

In diesem Kontext hat es sich in der Praxis positiv herausgestellt, dass die Führungskulisse als Materialreduzierung des Führungsteils oder als Materialaussparung des Führungsteils ausgestaltet ist, je nach Anwendung.

Schließlich ist es vorteilhaft, wenn das Führungsteil für einen manuellen Schaltmodus in eine den Schalthebel außergriffige Position, z. B. eine Parkposition, bringbar ist bzw. gebracht wird, somit nicht mehr die Schalteinrichtung schaltet. Nunmehr kann manuell - also von einer Person - geschaltet werden, um die Betätigung der Schaltung subjektiv beurteilen zu können.

Weiter bevorzugte Ausgestaltungen der Getriebeprüfvorrichtung sind den weiteren Unteransprüchen zu entnehmen.

Im folgenden wird die Erfindung anhand von Zeichnungsfiguren unterschiedlicher Ausführungsbeispiele nicht beschränkend näher erläutert. Im einzelnen zeigen:
- FIG. 1 -: eine skizzenhafte Darstellung einer Getriebeprüfvorrichtung mit einer. Bedieneinrichtung und einer Schalteinrichtung;
- FIG. 2 -: eine skizzenhafte Querschnittsansicht eines Führungsteils während eines Schaltvorgangs;
- FIG. 3 -: das in Figur 2 gezeigte Führungsteil bei einem eingelegten Gang.

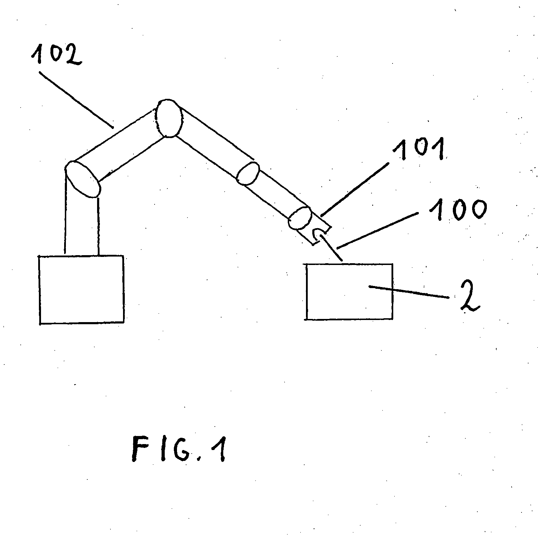

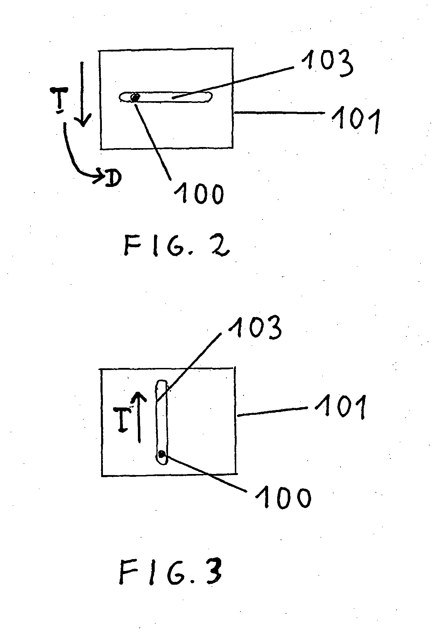

In Figur 1 ist eine erfindungsgemäße Getriebeprüfvorrichtung skizzenhaft dargestellt, wobei eine Bedieneinrichtung 2 einen Schalthebel 100 aufweist, der über ein Führungsteil 101 mittels einer Schalteinrichtung 102 in Form eines Mehrfachachsroboters (in der Regel Sechsachs-Industrieschaltroboter) beim Schalten geführt wird. In diesem Fall befindet sich der Schalthebel 100 in einer als Langloch ausgestalteten Führungskulisse 103 des Führungsteils 101 (s. Figur 2 in Querschnittsansicht von oben), wobei beim Einlegen eines Gangs die Schalteinrichtung 102 über ihre Arme (Robo-terarme) vom Leerlauf in beispielsweise den ersten Gang schaltet in Richtung des Pfeils T, wobei der Schalthebel 100 mechanisch anschlägt am Material des das Langloch 103 bildenden Führungsteils, so dass der Schalthebel 100 zwangsgeführt und bewegt wird, um auf diese Weise einen - in diesem Fall den ersten - Gang einzulegen. Nach Einlegen des ersten Gangs wird das Führungsteil 101 über die Arme der Schalteinrichtung 102 in Richtung des Pfeils D gedreht derart, dass der Schalthebel 100 nunmehr beweglich ist in Richtung des Pfeils T, somit beweglich im wesentlichen in Längsrichtung des Langloches 103 (die Führungskulisse), so dass bei einer entsprechenden Getriebeprüfung ein Gangspringer erfaßt werden kann, da der Schalthebel 100 in der Führungskulisse 103 hemmungsfrei beweglich ist (s. Figur 3).

## Patentansprüche

1. Getriebeprüfvorrichtung,
mit einer Bedieneinrichtung (2), die einen Schalthebel (100) aufweist, wobei ein Führungsteil (101) einer Schalteinrichtung (102) den Schalthebel (100) beim Schalten mechanisch angreifend führt, **dadurch gekennzeichnet, daß**
das Führungsteil (101) eine Führungskulisse (103) aufweist, in die der Schalthebel (100) bei der Getriebeprüfung eingreift, wobei nach Einlegen eines Gangs bei Verbleiben des Schalthebels (100) in der Führungskulisse (103) das Führungsteil (101) den Schalthebel (100) freigebend derart bewegbar ist, daß der Schalthebel (100) in der Führungskulisse (103) bezüglich der Führungskulisse (103) hemmungsfrei beweglich ist.

2. Getriebeprüfvorrichtung nach Anspruch 1, **dadurch gekennzeichnet, daß** die freigebende Bewegung des Führungsteils (101) eine Dreh-, Translations- oder Verschwenkungsbewegung ist.

3. Getriebeprüfvorrichtung nach einem der Ansprüche 1 bis 2, **dadurch gekennzeichnet, daß** die Führungskulisse (103) zumindest teilweise langlochartig insbesondere als Langloch ausgestaltet ist.

4. Getriebeprüfvorrichtung nach einem der Ansprüche 1 bis 3, **dadurch gekennzeichnet, daß** die Führungskulisse (103) als Materialreduzierung des Führungsteils (101) oder als Materialausnehmung des Führungsteils (101) ausgestaltet ist.

5. Getriebeprüfvorrichtung nach einem der Ansprüche 1 bis 4, **dadurch gekennzeichnet, daß** durch Drehung des Führungsteils (101) um im wesentlichen 90 Grad der Schalthebel (100) in der Führungskulisse (103) hemmungsfrei beweglich ist.

6. Getriebeprüfvorrichtung nach einem der Ansprüche 1 bis 5, **dadurch gekennzeichnet, daß** mindestens eine Einrichtung zur Erfassung von Vibrationen am zu prüfenden Getriebe angebracht ist.

7. Getriebeprüfvorrichtung nach Anspruch 6, **dadurch gekennzeichnet, daß** die mindestens eine Einrichtung zur Erfassung von Vibrationen am Schaltmechanismus (8) des Getriebes oder an einer Zustelleinrichtung (20) angebracht ist.

8. Getriebeprüfvorrichtung nach einem der Ansprüche 1 bis 7, **dadurch gekennzeichnet, daß** das Führungsteil (101) für einen manuellen Schaltmodus in eine den Schalthebel (100) außergriffige Position bringbar ist .

9. Verfahren zum Prüfen von Getrieben, **dadurch gekennzeichnet, daß**
- eine Getriebeprüfvorrichtung nach einem der Ansprüche 1 bis 8 verwendet wird.

10. Verfahren nach Anspruch 9, **dadurch gekennzeichnet, daß**
- während einer Gangprüfung eines Getriebes (4) bei Verbleiben des Schalthebels (100) in der Führungskulisse (103) das Führungsteil (101) den Schalthebel (100) freigebend derart bewegt wird, daß der Schalthebel (100) in der Führungskulisse (103) bezüglich der Führungskulisse (103) hemmungsfrei beweglich ist.

11. Verfahren nach einem der Ansprüche 9 bis 10, **dadurch gekennzeichnet, daß** durch Drehung des Führungsteils (101) um im wesentlichen 90 Grad der Schalthebel (100) in der Führungskulisse (103) hemmungsfrei beweglich ist.

12. Verfahren nach einem der Ansprüche 9 bis 11, **dadurch gekennzeichnet, daß** das Führungsteil (101) für einen manuellen Schaltmodus in eine den Schalthebel (100) außergriffige Position gebracht wird.

## Claims

1. Transmission testing apparatus, having an operating device (2) which has a gearshift lever (100), wherein a guide part (101) of a shifting device (102) guides the gearshift lever (100) so as to act mechanically during shifting, **characterized in that** the guide part (101) has a slotted guide (103), into which the gearshift lever (100) engages during the transmission test, wherein, after engaging of a gear when the gearshift lever (100) remains in the slotted guide (103), the guide part (101) can be moved so as to release the gearshift lever (100), in such a way that the gearshift lever (100) can be moved in the slotted guide (103) in a non-blocked manner with regard to the slotted guide (103).

2. Transmission testing apparatus according to Claim 1, **characterized in that** the releasing movement of the guide part (101) is a rotational, translatory or pivoting movement.

3. Transmission testing apparatus according to either of Claims 1 and 2, **characterized in that** the slotted guide (103) is configured at least partially in a slot-like manner, in particular as a slot.

4. Transmission testing apparatus according to one of Claims 1 to 3, **characterized in that** the slotted guide (103) is configured as a material reduction of the guide part (101) or as a material recess of the guide part (101).

5. Transmission testing apparatus according to one of Claims 1 to 4, **characterized in that**, as a result of rotation of the guide part (101) about substantially 90 degrees, the gearshift lever (100) can be moved in the slotted guide (103) in a non-blocked manner.

6. Transmission testing apparatus according to one of Claims 1 to 5, **characterized in that** at least one device for detecting vibrations is attached to the transmission to be tested.

7. Transmission testing apparatus according to Claim 6, **characterized in that** the at least one device for detecting vibrations is attached to the shifting mechanism (8) of the transmission or to an application device (20).

8. Transmission testing apparatus according to one of Claims 1 to 7, **characterized in that**, for a manual shifting mode, the guide part (101) can be moved into a position which is out of engagement with the gearshift lever (100).

9. Method for testing transmissions, **characterized in that**
- a transmission testing apparatus according to one of Claims 1 to 8 is used.

10. Method according to Claim 9, **characterized in that**,
- during a gear test of a transmission (4) when the gearshift lever (100) remains in the slotted guide (103), the guide part (101) is moved so as to release the gearshift lever (100), in such a way that the gearshift lever (101) can be moved in the slotted guide (103) in a non-blocked manner with regard to the slotted guide (103).

11. Method according to either of Claims 9 and 10, **characterized in that**, as a result of rotation of the guide part (101) about substantially 90 degrees, the gearshift lever (100) can be moved in the slotted guide (103) in a non-blocked manner.

12. Method according to one of Claims 9 to 11, **characterized in that**, for a manual shifting mode, the guide part (101) is moved into a position which is out of engagement with the gearshift lever (100).

## Revendications

1. Appareil de test de transmission,
comprenant un dispositif de commande (2) qui comprend un levier de changement de vitesses (100), une partie de guidage (101) d'un dispositif de changement de vitesses (102) guidant le levier de changement de vitesses (100) de manière à agir mécaniquement lors du changement de vitesses, **caractérisé en ce que**
la partie de guidage (101) comprend une coulisse de guidage (103) dans laquelle vient en prise le levier de changement de vitesses (100) lors du test de la transmission, et après l'enclenchement d'un rapport avec maintien du levier de changement de vitesses (100) dans la coulisse de guidage (103), la partie de guidage (101) pouvant être déplacée en libérant le levier de changement de vitesses (100), de telle sorte que le levier de changement de vitesses (100) soit mobile dans la coulisse de guidage (103) sans blocage par rapport à la coulisse de guidage (103).

2. Appareil de test de transmission selon la revendication 1, **caractérisé en ce que** le déplacement de libération de la partie de guidage (101) est un déplacement de rotation, de translation ou de pivotement.

3. Appareil de test de transmission selon l'une quelconque des revendications 1 et 2, **caractérisé en ce que** la coulisse de guidage (103) est configurée au moins partiellement en forme de trou oblong, en particulier en tant que trou oblong.

4. Appareil de test de transmission selon l'une quelconque des revendications 1 à 3, **caractérisé en ce que** la coulisse de guidage (103) est configurée en tant que réduction de matériau de la partie de guidage (101) ou en tant qu'évidement de matériau de la partie de guidage (101).

5. Appareil de test de transmission selon l'une quelconque des revendications 1 à 4, **caractérisé en ce que** le levier de changement de vitesses (100) est mobile sans blocage dans la coulisse de guidage (103) par rotation de la partie de guidage (101) d'essentiellement 90 degrés.

6. Appareil de test de transmission selon l'une quelconque des revendications 1 à 5, **caractérisé en ce qu'**au moins un dispositif de détection de vibrations est installé sur la transmission à tester.

7. Appareil de test de transmission selon la revendication 6, **caractérisé en ce que** l'au moins un dispositif de détection de vibrations est installé sur le mécanisme de changement de vitesses (8) de la transmission ou sur un dispositif d'avance (20).

8. Appareil de test de transmission selon l'une quelconque des revendications 1 à 7, **caractérisé en ce que** la partie de guidage (101) peut, pour un mode de changement de vitesses manuel, être amenée à une position hors de prise avec le levier de changement de vitesses (100).

9. Procédé de test de transmissions, **caractérisé en ce que**
- un appareil de test de transmission selon l'une quelconque des revendications 1 à 8 est utilisé.

10. Procédé selon la revendication 9, **caractérisé en ce que**
- pendant un test de rapport d'une transmission (4) avec maintien du levier de changement de vitesses (100) dans la coulisse de guidage (103), la partie de guidage (101) est déplacée en libérant le levier de changement de vitesses (100), de telle sorte que le levier de changement de vitesses (100) soit mobile dans la coulisse de guidage (103) sans blocage par rapport à la coulisse de guidage (103).

11. Procédé selon l'une quelconque des revendications 9 et 10, **caractérisé en ce que** le levier de changement de vitesses (100) est mobile sans blocage dans la coulisse de guidage (103) par rotation de la partie de guidage (101) d'essentiellement 90 degrés.

12. Procédé selon l'une quelconque des revendications 9 à 11, **caractérisé en ce que** la partie de guidage (101) est, pour un mode de changement de vitesses manuel, amenée à une position hors de prise avec le levier de changement de vitesses (100).
